# EUROPÄISCHE PATENTSCHRIFT

(11) **EP 2 154 606 B1**
(45) Veröffentlichungstag und Bekanntmachung des Hinweises auf die Patenterteilung: **29.08.2018**
(21) Anmeldenummer: 09166167.8
(22) Anmeldetag: 23.07.2009
(51) Int. Cl.: G06F 8/35, G06F 8/36, G06F 9/44, G05B 19/042, G05B 17/00, G06F 9/48

(54) **Erzeugen einer ablauffähigen Konfiguration**
Generation of a runnable configuration
Génération d'une configuration exécutable

(30) Priorität: 04.08.2008 AT 42008 U
(43) Veröffentlichungstag der Anmeldung: 17.02.2010
(73) Patentinhaber: AVL List GmbH, 8020 Graz (AT)
(72) Erfinder: Gruber, Werner, 8650 Kindberg (AT); Peinsipp, Dietmar, 8020 Graz (AT); Priller, Peter, 8111 Judendorf-Straßengel (AT); Stieglbauer, Gerald, 4923 Lohnsburg am Kobernaußerwald (AT)
(74) Vertreter: Patentanwälte Pinter & Weiss OG

(56) Entgegenhaltungen:
- US-A1- 2007 093 994
- US-A1- 2007 143 095
- NATIONAL INSTRUMENTS CORPORATION: "LabVIEW Real-Time Module User Manual" INTERNET CITATION April 2004 (2004-04), XP002372215 Gefunden im Internet: URL:http://www.ni.com/pdf/manuals/322154e. pdf> [gefunden am 2006-03-14]

## Beschreibung

Die gegenständliche Erfindung betrifft ein Verfahren zur Erzeugung einer auf einem Zielsystem, bevorzugt einer Automatisierungseinrichtung zur Entwicklung eines Fahrzeuges bzw. einer Fahrzeugkomponente, ablauffähigen Konfiguration zur Durchführung einer Automatisierungsaufgabe auf dem Zielsystem, sowie eine Vorrichtung zum Erzeugen und Ausführen einer auf einem Zielsystem, bevorzugt einer Automatisierungseinrichtung zur Entwicklung eines Fahrzeuges bzw. einer Fahrzeugkomponente, ablauffähigen Konfiguration zur Durchführung einer Automatisierungsaufgabe auf dem Zielsystem.

Moderne Prüfstände zur Entwicklung eines Fahrzeuges bzw. einer Fahrzeugkomponente müssen einer Reihe von Ansprüchen gerecht werden und müssen eine Vielzahl von Automatisierungsaufgaben abdecken, wie z.B. die Steuerung und Regelung diverser Prüfstandskomponenten und Prüfläufe, Durchführen diverser Messungen am Prüfling, Visualisierung des Prüfstandes und der Daten, etc. Die Automatisierungseinrichtung derzeitiger Prüfstände ist, hauptsächlich aus historischen Gründen, aber ein zentrales System, bei dem über unterschiedlichste Schnittstellen die einzelnen Prüfstandskomponenten angebunden werden. Dadurch entsteht in der Automatisierungseinrichtung ein zentraler Informations- und Datenpool, auf dem alle Dienste und Services aufsetzen können. Allerdings entsteht dadurch auch ein unflexibles System mit eingeschränkter Skalierbarkeit, da umfangreiche Änderungen in der Automatisierungseinrichtung erforderlich sind, um neue Komponenten (SW und HW) einzubinden (z.B. eine neue Schnittstelle, geänderte Verarbeitung der Daten von der/zur Komponente, Anpassung der Integration in das bestehende System, etc.). Das macht eine Änderungen bzw. Erweiterung der Automatisierungseinrichtung oder die Umsetzung spezieller Kundenwünsche sehr aufwendig. Zudem müssen dadurch notwendigerweise eine Fülle unterschiedlicher Konfigurationen gepflegt werden, was die Wartung bestehender Systeme aufwendig macht. Ein weiteres Problem der bestehenden zentralen Automatisierungseinrichtungen liegt in der fehlenden einfachen Möglichkeit, eine externe Funktionalität, wie z.B. ein bestimmter Regler eines Kunden oder eine spezielle Messtechnik, in die Automatisierungseinrichtungen einzubinden. Zentrale Systeme müssen darüber hinaus alle Rechenaufgaben auch zentral abarbeiten, wodurch man bald an die Leistungsgrenze der CPU stößt.

Aus der US 2007/009394 A1 ist ein Verfahren zur Konfiguration einer programmierbaren Hardware (FPGA). Dabei werden grafisch Softwarebausteine zu einem grafischen Modell der Software zusammengeschaltet, das in eine Netzliste umgewandelt wird. Die Netzliste wird dann in ein FPGA Programmfile kompiliert, das dann auf die programmierbare Hadrware übertragen wird. Die grafische Darstellung der Software wird damit in eine Verschaltung von logischen Bausteinen, wie z.B. AND-Gattern, Flip-Flops, etc., umgewandelt, wobei die Struktur der Softwarekomponenten aufgelöst wird. Es ist im programmierten FPGA nicht mehr möglich, einzelne Softwarekomponenten zu identifizieren oder isoliert anzusprechen. Ganz im Gegenteil bedingt eine Änderung der Software eine Neuerstellung der Konfiguration auf dem FPGA. Ebenso muss die Konfiguration neu erstellt werden, wenn sich das Zielsystem, also die programmierbare Hardware, ändert.

Es ist daher eine Aufgabe der gegenständlichen Erfindung, eine Vorrichtung und ein Verfahren zur Erzeugung eines auf einem Zielsystem, insbesondere einer Automatisierungseinrichtung zur Entwicklung eines Fahrzeuges bzw. einer Fahrzeugkomponente, ablauffähigen Programms anzugeben, die einerseits flexibel sind und andererseits einfach und rasch skaliert und an die Bedürfnisse des Betreibers des Zielsystems anpassbar sind. Eine weitere Aufgabe liegt darin, die Einrichtung so auszugestalten, dass auf einfache Weise auch externe Funktionalitäten in das Zielsystem eingebunden werden können.

Diese Aufgabe wird durch das in den unabhängigen Ansprüchen definierte Verfahren und die zugehörige Vorrichtung gelöst. Durch die Verwendung von abstrahierten Softwarekomponenten kann einfach und flexibel eine bestimmte Automatisierungsaufgabe umgesetzt werden. Die Softwarekomponenten können dabei gemäß den Anforderungen erstellt werden, womit eine einfache Anpassung an das Zielsystem und auch die einfache Einbindung externer Funktionalitäten ermöglicht wird. Gegenüber einem zentralen System, wie z.B. bei bisherigen Automatisierungseinrichtungen, bei dem aufgrund der starren Anordnung aller Verarbeitungsschritte eine Anpassung an den tatsächlichen Signalverlauf und damit signalflussrichtiges Abarbeiten nur sehr schwer möglich war, kann beim erfindungsgemäßen komponentenorienterten Ansatz sehr einfach die optimale signalflussrichtige Abarbeitung sichergestellt werden. Darüber hinaus kann das System einfach auf Komponentenebene adaptiert und skaliert werden, z.B. indem nur einzelne Komponenten ausgetauscht werden, ohne das ganze Zielsystem ändern zu müssen. Damit erreicht man ein äußerst flexibles Verfahren zur Erstellung von ablauffähigen Konfigurationen. Darüber hinaus sind die einzelnen Komponenten unabhängig und getrennt voneinander entwickelbar, was z.B. die Erweiterung der Funktionalität sehr vereinfacht. Weiters wird es dadurch möglich, dass eine Komponente in mehreren Versionen parallel am Zielsystem vorliegen kann, was die Flexibilität erhöht. Außerdem ist durch diese Struktur eine einfache und effiziente Verteilbarkeit auf mehrere CPU's/Cores möglich.

Durch die erfindungsgemäßen Art der Erstellung der ablauffähigen Konfiguration kann vorteilhaft bereits bei der Erstellung der Konfiguration auf Eigenheiten bzw. Vorgaben des Zielsystems Rücksicht genommen werden, was eine auf das jeweilige Zielsystem optimierte Konfiguration bzw. Abarbeitungsreihenfolge ermöglicht. Dazu kann vorgesehen werden, dass ein Filter und/oder ein Abtastglied automatisch vorgeschlagen bzw. in die ablauffähige Konfiguration eingesetzt wird, falls es zu Frequenzänderungen im Signalfluss kommt. Die Softwarekomponenten können am Zielsystem zumindest teilweise in unterschiedlichen Threads abgearbeitet werden, wobei unterschiedliche Threads auch mit unterschiedlichen Frequenzen getaktet werden können. Dies ermöglicht eine hochperformante Abarbeitung der Konfiguration am Zielsystem. Vorteilhaft laufen dazu am Zielsystem generische Prozesse, die Prozessraum, Mailboxen und Threads zur Verfügung stellen, in die die Softwarekomponenten als dynamisch ladbare Library dazu geladen und beliebig oft instantiiert werden. Weiters kann eine Softwarekomponente auch einen Trigger aufweisen, wobei die Trigger Information automatisch und transparent entlang der Abarbeitungsreihenfolge gerouted werden kann, was das Reagieren der Softwarekomponente auf bestimmte Ereignisse ermöglicht. Eine Überwachung der Abarbeitung kann erzielt werden, wenn einem Trigger einer Softwarekomponente ein Zeitbudget zugeteilt wird und eine Softwarekomponente, die dieses Zeitbudget überzieht, suspendiert wird oder eine Warnung versendet. Ebenso ist es vorteilhaft, eine Softwarekomponente am Zielsystem in einem Zyklus mehr als einmal zu bearbeiteten, um z.B. erst später benötigte Aufgaben auszuführen, wenn Ressourcen dazu vorhanden sind, was die Reaktionsgeschwindigkeit erhöhen kann.

Um besonders flexibel zu sein, kann vorteilhaft vorgesehen sein, die Abarbeitungsreihenfolge zur Laufzeit zwischen zwei vollständigen Zyklen umzuschalten oder zu modifizieren, indem der neue Ablauf vorbereitet und das Umschalten/Modifizieren dann synchron zwischen Ende des einen und Beginn des nächsten Zyklus praktisch ohne Overhead erfolgt.

Eine Änderungen einer ablauffähigen Konfiguration kann sehr einfach, flexibel und rasch über Delta-Netzlisten durchgeführt werden, wobei eine Delta-Netzliste die zu entfernenden Netzteile und die hinzukommenden Netzteile beschreibt und der Austausch zu einem gemäß der Abarbeitungsreihenfolge günstigen Zeitpunkt erfolgt. Davon nicht betroffene Softwarekomponenten können daher im Laufzeitsystem ungestört weiter exekutiert werden. So werden partielle Änderungen im System möglich, ohne das Gesamtsystem stoppen zu müssen.

Die Performance der Abarbeitung der ablauffähigen Konfiguration kann weiter erhöht werden, wenn Softwarekomponenten am Zielsystem auf unterschiedlichen CPU's oder unterschiedlichen Kernen einer CPU exekutiert werden. Durch die feingranulare Softwarekomponentenstrukur kann am Zielssystem auch fein verteilt werden. Dies ermöglicht auch eine optimierte Abarbeitung der Konfiguration am jeweiligen Zielsystem.

Die gegenständliche Erfindung wird nachfolgend anhand der schematischen, beispielhaften und nicht einschränkenden und vorteilhafte Ausgestaltungen zeigenden Figuren 1 bis 3 beschrieben. Dabei zeigt
Fig. 1 ein Blockdiagramm eines Prüfstandes mit einer Automatisierungseinrichtung,
Fig. 2 ein Ablaufschema zur Erzeugung eines ablauffähigen Programmcodes gemäß der Erfindung und
Fig. 3 ein Beispiel eines einfachen Modells einer Automatisierungsaufgabe.

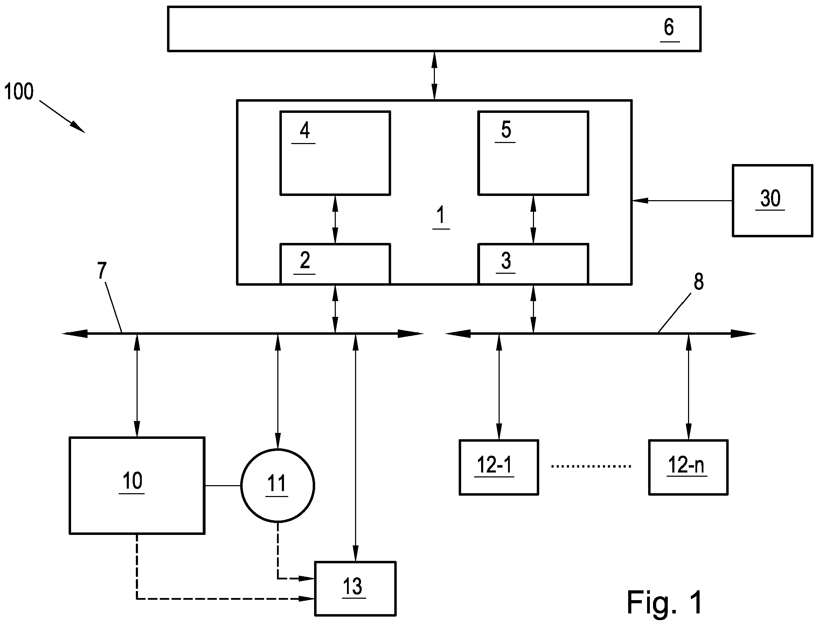

In Fig. 1 ist schematisch ein Prüfstand 100 dargestellt, auf dem ein Prüfling 10, z.B. ein Motor, ein Antriebsstrang oder ein ganzes Fahrzeug, hinsichtlich bestimmter Funktionen geprüft werden soll. Am Prüfling 10 ist dazu in der Regel auch eine Belastungsmaschine 11 angebunden, um bestimmte Lastzustände erzeugen zu können. Sowohl Prüfling 10 als auch Belastungsmaschine 11 werden dabei von einer Automatisierungseinrichtung 1 (Zielsystem), die am Prüfstand als Hardware implementiert ist und in der die Prüfstandssoftware läuft, gemäß der durchzuführenden Prüfaufgabe geregelt. In der Automatisierungseinrichtung 1 ist dazu eine Regelungseinheit 4 vorgesehen, die über eine Schnittstelle 2 zu einem Datenbus 7 mit dem Prüfling 10 und der Belastungsmaschine 11 kommuniziert. Dazu können noch externe Einheiten 13, wie z.B. eine externe Datenerfassungseinheit (DAQ) z.B. für schnelle (real-time) Messungen (angedeutet durch die strichlierte Linien) oder ein externes Steuergerät z.B. für verteilte Regelung oder Simulation, vorgesehen sein, die für eine bestimmte Prüfaufgabe benötigt werden und die ebenfalls über den Datenbus 7 mit der Automatisierungseinrichtung 1 bzw. dem Prüfling 10 bzw. der Belastungsmaschine 11 verbunden ist. Für Regelungsaufgaben ist in der Regel ein schneller Datenbus, wie z.B. EtherCAT, Profibus, CAN-Bus, Ethernet Powerlink, etc., vorgesehen, um entsprechende Reaktionszeiten gewährleisten zu können. Neben dem schnellen Datenbus kann noch ein weiterer langsamerer Datenbus 8, wie z.B. Ethernet, Profibus, CAN-Bus, vorgesehen sein, über dem weniger zeitkritische Daten, wie z.B. Messdaten, transportiert werden können. Natürlich können auch mehrere (schnelle und/oder langsame) Datenbusse vorhanden sein. Dazu ist in der Automatisierungseinrichtung 1 eine Schnittstelle 3 vorgesehen, über die entsprechende Verarbeitungseinheiten 5 in der Automatisierungseinrichtung 1 mit Prüfstandskomponenten 12-1 bis 12-n, z.B. mit Messgeräten (z.B. BlowBy-Messungen, Kraftstoffverbrauch, Wasser-, Öl-, Luft- oder Kraftstoffsensoren, Abgasmessungen, etc.) oder Aktuatoren (z.B. Ganghebel, Kupplung, Gaspedal, etc.), kommunizieren können.

Die Automatisierungseinrichtung 1 eines Prüfstandes kann auch mit einer übergeordneten Prüfstandsmanagementeinheit 6 verbunden sein, die z.B. mehrere Prüfstände eines Prüffeldes oder einer Prüffabrik steuert und verwaltet, oder Datenmanagementaufgaben übernimmt.

In der Automatisierungseinrichtung 1 läuft die Prüfstandssoftware, die aus unterschiedlichen Programmteilen besteht, z.B. Programme zum Datenmanagement, Programme zur Durchführung bestimmter Automatisierungsaufgaben (z.B. die Regelung der Belastungsmaschine, Ablaufsteuerung von Messprozeduren, Vorgeben bestimmter Stellwertprofile, Überwachung des Prüflings, automatisches Reagieren auf Ausnahmesituationen, etc.), Programme zur Kommunikation mit übergeordneten Prüfstandsmanagementeinheiten, etc. Diese einzelnen Programme können dabei bekanntermaßen je nach Anforderung auf einem Echtzeit-Betriebssystem oder einem herkömmlichen Betriebssystem laufen.

Es ist nun weiters eine Entwicklungseinheit 30 vorgesehen, die mit der Automatisierungseinrichtung 1 verbunden ist, z.B. direkt oder über ein Netz und mit der bestimmte ablauffähige Konfigurationen, vornehmlich Konfigurationen zur Durchführung einer Automatisierungsaufgabe, erzeugt und in die Automatisierungseinrichtung 1 geladen werden können. Eine ablauffähige Konfiguration besteht dabei im Wesentlichen aus den beteiligten Software- und Hardwarekomponenten, der Art und Weise, wie diese zusammenarbeiten und wie eine solche Konfiguration zur Durchführung der Automatisierungsaufgabe abgearbeitet werden muss. Dazu ist auf der Automatisierungseinrichtung 1 auch Software installiert, die solche Konfigurationen interpretieren und ausführen kann. Das Laden der Konfiguration kann dabei aber natürlich auch über die Prüfstandsmanagementeinheit 6 oder einen Datenbus 7, 8 erfolgen. Genauso kann die Entwicklungseinheit 30 integraler Teil der Automatisierungseinrichtung 1 sein.

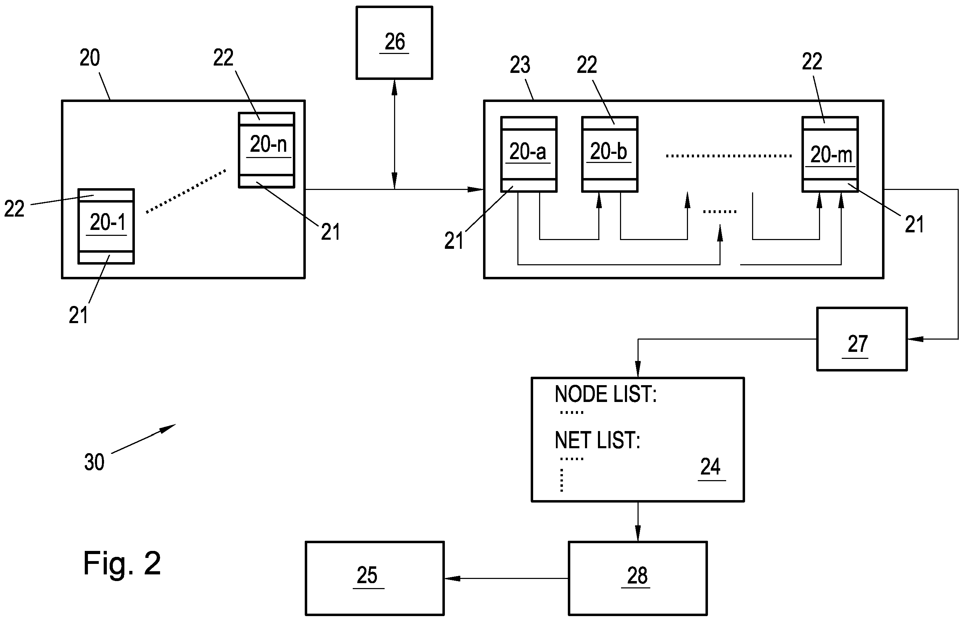

Um eine solche ablauffähige Konfiguration erstellen zu können, ist in der Entwicklungseinheit 30 eine Bibliothek (Speicher) für abstrahierte Softwarekomponenten 20-1 bis 20-n, die einzelne Funktionen der Automatisierungseinrichtung 1, z.B. ein Filter, eine I/O-Schnittstelle, eine mathematische Funktion, ein Regelgesetz, oder eine externe Funktionalität, etc. umsetzen, vorgesehen, wie in Fig. 2 schematisch dargestellt. "Abstrahiert" bedeutet hier, dass die gespeicherten Softwarekomponenten 20-1 bis 20-n noch keine konkrete (zielsystemabhängige) Ausprägung besitzen, sondern nur anhand ihrer allgemeinen Funktion beschrieben sind, also z.B. als I/O-Schnittstelle und nicht als CAN-Input oder-Output. Diese Softwarekomponenten 20-1 bis 20-n können vordefiniert sein oder können bei Bedarf über entsprechende User-Schnittstellen neu erstellt werden. Jede Softwarekomponente 20-1 bis 20-n ist mit einem vorgegebenen, gleichen Kommandointerface 22 und einer vorgegebenen, gleichen Schnittstelle 21 zu einem Datenkanal in der Automatisierungseinrichtung 1 ausgeführt. Ein Datenkanal transportiert allgemein skalare oder vektoriell organisierte Daten in verschiedenen Formaten (z.B. Ganzzahl, Gleitkomma, etc.) zyklisch oder event-orientiert von einem Datenproduzenten zu einem oder mehreren Datenkonsumenten und kann z.B. als Bus ausgeführt sein. Softwarekomponenten besitzen keine direkten gegenseitigen Abhängigkeiten und können damit weitgehend unabhängig voneinander gewartet werden. Diese Softwarekomponenten können parallel auch in mehreren Ausprägungen vorliegen. Im Idealfall existiert eine Beschreibung in einer abstrakten Modellierungssprache in einer zielsystemunabhängigen Ausprägung. Damit verbunden (gemappt) kann auch bereits eine für ein bestimmtes Zielsystem (also z.B. eine bestimmte Automatisierungseinheit 1) spezifische Beschreibung vorliegen. Beides kann bereits am Zielsystem vorliegen, oder auf einem unabhängigen System. Dann kann es noch die eigentlich ablaufenden Softwarekomponenten kompiliert als Executable am Zielsystem selbst geben.

Alle Softwarekomponenten müssen aber letztendlich als ablauffähige Executables am Zielsystem vorhanden sein. Diese Executables können dabei bereits am Zielsystem vorhanden sein, oder können dem Zielsystem zu einem späteren Zeitpunkt, z.B. bei der Installation neuer Softwarekomponenten, übergeben werden.

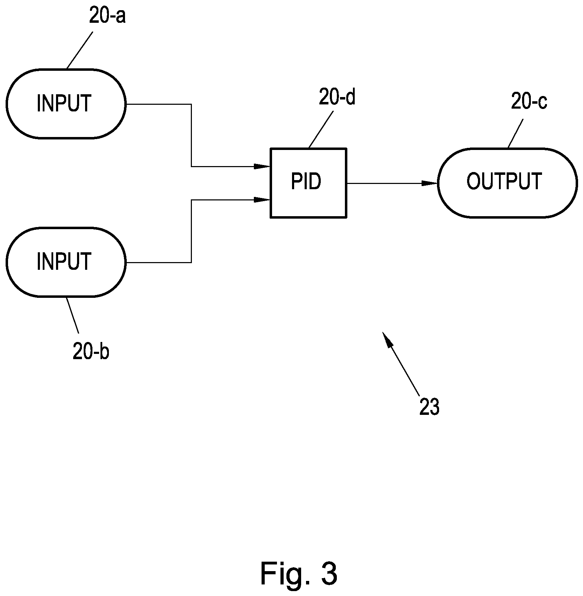

Aus dieser Bibliothek 20 werden gemäß der umzusetzenden Automatisierungsaufgabe (z.B. automatisiert ablaufende Prüfläufe, in denen der Prüfling ein bestimmtes Anforderungsprofil (z.B. Drehzahl/Drehmoment) zeit- oder weggesteuert vorgegeben bekommt und dessen Verhalten in Kennwerten und Kennzeiten ermittelt wird, oder das wiederholte Abfahren von Schaltvorgängern in einem Getriebe zum Ermitteln der Verschleißerscheinungen, oder das Bestimmen von Kennlinien von Verbrennungskraftmaschinen und das automatische Optimieren in Bezug auf Leistungs- oder Abgaskriterien, etc.) über eine geeignete Benutzerschnittstelle 26 eine Anzahl von Softwarekomponenten 20-a bis 20-m ausgewählt und über die Datenkanäle 21 zu einem, noch abstrahierten, Modell 23 der Automatisierungsaufgabe zusammengeschaltet. Ein einfaches Modell 23 eines Reglers ist in Fig. 3 dargestellt. Das Modell 23 besteht dabei aus vier Softwarekomponenten 20-a bis 20-d, wobei zwei davon Eingänge (Input) sind, eine Softwarekomponente das Regelgesetz eines PID-Reglers mit den beiden Eingängen realisiert und die errechneten Ausgangsgrößen über einen Ausgang (Output) ausgegeben werden. Ein Modell 23 kann dabei, je nach durchzuführender Automatisierungsaufgabe, natürlich nahezu beliebig komplex werden.

Über eine Modelltransformationseinheit 27 wird das Modell 23 mittels einer Modelltransformation in eine Netzliste 24 bestehend aus Knoten, Attributen und Kanten übergeführt, wobei die Softwarekomponenten 20-a bis 20-m die Knoten, die initialen Parameter der Softwarekomponenten die Attribute und die Datenkanäle 21 die Kanten der Netzliste 24 bilden. Solche Modelltransformationen sind an sich bekannt und bestehen in der Regel aus mehreren hintereinander folgenden Transformationsschritten. Dabei können durch eindeutige Identifikation von Softwarekomponententyp und Version im gleichen System auch mehrere Versionen der gleichen Softwarekomponente parallel betrieben werden. Die Netzliste 24 kann in einer strukturierten Beschreibungssprache, wie z.B. XML, vorliegen. Eine solche Netzliste 24 beschreibt, bevorzugt in abstrahierter Form, die Gesamtheit der verwendeten Softwarekomponenten 20-a bis 20-m, sowie deren vollständige Verschaltung. Durch diese einfache Darstellung kann die gewünschte Funktionalität im Laufzeitsystem sehr rasch und noch zielssystemunabhängig aufgebaut werden.

Die Netzliste 24 ist eine abstrakte Beschreibung der umzusetzenden Automatisierungsaufgabe und kann zielsystemunabhängig sein. Die Netzliste 24 kann daher bei Bedarf in auf verschiedenen Zielsystemen ablauffähigen Konfigurationen 25 übersetzt werden. Um aus der Netzliste 24 in einer Zielsystemtransformationseinheit 28 eine ablauffähige Konfiguration 25 zu erzeugen, werden die zielsystemunspezifischen Softwarekomponenten auf nun zielsystemspezifische Komponenten gemappt, d.h. ein allgemeiner "Input" wird nun z.B. zu einem konkreten "CAN-Input". Dazu liegt die dazu benötigte Information entweder bereits in der Entwicklungseinheit 30 vor, z.B. wenn das Zielsystem und seine Komponenten und Ressourcen bereits vorher bekannt ist, oder die Entwicklungseinheit 30 verbindet sich mit dem Zielsystem (z.B. mit einem bestimmten Prüfstand) und fragt alle erforderlichen Informationen, also welche konkreten Komponenten und Ressourcen am Zielsystem vorhanden sind, wie diese zusammenhängen, etc., ab. Dabei sind m:n Relationen, d.h. eine Komponente kann auch auf mehrere zielsystemspezifische Komponenten aufgeteilt bzw. zusammengefasst werden, möglich, wobei 1:1 Relationen, d.h. eine zielsystemunabhängige Komponente wird in eine zielsystemabhängige Komponente gemappt, angestrebt werden. Weiters trennt die Zielsystemtransformationseinheit 28 die Ressourcen nach verfügbaren Kanälen, nach Komponenten mit ihren Ein- und Ausgangsports, Parametern sowie Vernetzungsinformation und Abarbeitungsreihenfolge und erstellt daraus die zielsystemabhängige Netzliste, also die ablauffähige Konfiguration 25. Der strukturelle Aufbau dieser zielsystemabhängigen Netzliste ist vorteilhaft für performantes und parallelisierbares Instanzieren ausgelegt.

Weiters werden die verwendeten Softwarekomponenten 20a- bis 20-m im Zielsystem instantiiert und über deren Kommandointerfaces 22 gemäß den Vorgaben parametrisiert.

Die Abarbeitungsreihenfolge der verschalteten Softwarekomponenten 20-a bis 20-m wird in der Zielsystemtransformationseinheit 28 aus der Netzliste 24 z.B. mittels bekannter Signalflussgraphen-Analyse der Grafentheorie erstellt. Selbstverständlich kann dazu aber auch jede andere geeignete Methode, z.B. Abhängigkeiten in der Netzliste 24 ermitteln und rekursiv zurück verfolgen, angewendet werden. Die Abarbeitungsreihenfolge zur signalflussrichtigen Abarbeitung der Netzliste 24 kann dabei bereits offline, z.B. in der Entwicklungseinheit 30, und auch vor dem Umwandeln der Netzliste 24 in eine zielsystemabhängige Netzliste erfolgen, oder aber auch erst am Zielssystem selbst. Signalflussrichtige Abarbeitung bedeutet dabei, dass Sequenzen von hintereinander zu tätigenden Rechenschritte zusammengestellt werden, die die betreffende Instanz einer Komponente, die es zu rechnen/abarbeiten gilt und gegebenenfalls auch eine Zusatzinformation wie z.B. "Phase" (Trigger/Posttrigger etc.) enthält. Zwei getrennte Sequenzen zeichnen sich vorteilhaft dadurch aus, dass sie keine Datenabhängigkeiten besitzen und daher auch unabhängig voneinander gerechnet bzw. durchlaufen werden können, was eine Voraussetzung für das Parallelisieren auf MultiCore/Multi-CPU Systemen darstellt.

Da eine Netzliste 24 bzw. das Modell 23 eine durchaus komplexe Struktur aufweisen kann, kann in diesem Schritt bei der signalflussrichtigen Abarbeitung vorteilhaft bereits einiges berücksichtigt werden. Z.B. können Filter bzw. Abtastglieder automatisch vorgeschlagen bzw. eingesetzt werden, falls es zu Frequenzänderungen im Signalfluss kommt. Es ist auch eine Abarbeitung mit verschiedenen Frequenzen möglich, z.B. indem verschiedene Threads erzeugt werden, deren Priorität z.B. gemäß rate monotonic scheduling festgelegt wird. Dazu kann auch vorgesehen sein, dass die Softwarekomponenten selbst keinen Thread haben, sondern nur die Umgebung. D.h., dass eine generische Umgebung einen Prozessraum, ein Thread Management, ein bekanntes DLL/RSL Management und eine oder mehrere Mailbox zur Verfügung stellt. Dabei steht ein Thread-Pool zur Verfügung, von dem jeweils ein Thread an einer Mailbox blockiert und bei einer Message an eine in dem Prozessraum befindliche Komponente die Message übernimmt und der Komponente zur Exekution zugeteilt wird. Daraufhin "rutscht" der nächste Thread aus dem Pool nach und wartet nun an der Mailbox. Jede oder einzelne Softwarekomponente(n) kann auch einen Trigger aufweisen, wobei die Trigger Information automatisch und transparent entlang der Abarbeitungsreihenfolge (Trigger Sequenz) gerouted werden kann, z.B. über CPU - Prozess - Komponente. In der Trigger Sequenz kann jedem Eintrag auch ein Zeitbudget mitgegeben werden. Eine Komponente, die dieses Zeitbudget überzieht kann suspendiert werden oder es kann eine Warnung versendet werden. Es kann auch eine intelligente Aufteilung in mehr als eine Phase vorgenommen werden, d.h. eine Softwarekomponente kann in einem Zyklus (z.B. ein Takt in einem zyklischen System. Beispiel Takt 100Hz --> ein Zyklus dauert daher 10ms) mehr als einmal drankommen. Grundsätzlich macht eine Softwarekomponente in einem Zyklus immer nur das, was für die nächste Softwarekomponente unmittelbar und sofort erforderlich ist und gibt dann bereits weiter. Durch die intelligente Aufteilung können später notwendige Dinge zwar später aber noch im gleichen Zyklus gemacht werden. Ebenso kann die Abarbeitungsreihenfolge auch noch zur Laufzeit zwischen zwei vollständigen Zyklen praktisch ohne Overhead umgeschaltet oder modifiziert werden. Dazu wird der Ablauf vorbereitet, wobei das Umschalten/Modifizieren dann synchron zwischen Ende des einen und Beginn des nächsten Zyklus erfolgt.

Durch die uniforme Gestalt aller Softwarekomponenten kann zum Zeitpunkt der Instantiierung von einem geeigneten Algorithmus entschieden werden, auf welcher CPU oder welchen Kern einer CPU des Zielsystems welche Softwarekomponente zu exekutieren ist. Diese Verteilung der Abarbeitung der Softwarekomponenten kann aber ebenfalls erst am Zielsystem selbst erfolgen. Die Verteilung erfolgt dabei vorteilhaft komponentenweise, d.h. nicht Teile einer Softwarekomponente werden auf verschiedene Cores/CPU's gelegt, sondern die ganze Softwarekomponente als Einheit wird einem Core/einer CPU zugeteilt. Durch die feingranulare Softwarekomponentenstrukur kann auch fein verteilt werden. Dazu gibt es verschiedene an sich bekannte Ansätze: Jede Komponente bringt ihre eigenen Einschränkungen mit, d.h. jede Softwarekomponente hat ihre eigenen Bedürfnisse definiert. Ein Solver löst dann dieses Constraint-Satisfaction Problem. Bei mehreren gültigen Lösungen kann eine Simulation dann noch die optimale Lösung herausfinden, bzw. die Durchführbarkeit überhaupt überprüfen. Eine andere Methode wäre z.B. ein Genetic Algorithm, ebenfalls mit nachfolgender Simulation der Verteilung und Beurteilung der "Fitness". Daher ist jede komplexe Netzliste 24 leicht parallelisierbar und auf Multi-CPU bzw. Multi-Core Systemen optimal aufteilbar. Dies wird auch durch die Natur der Datenkanäle als global von allen CPU's gleichwertig zugängliche Kommunikationswege unterstützt.

Änderungen einer Modellkonfiguration werden somit über Delta-Netzlisten ebenfalls leicht möglich. Solche Delta-Netzlisten beschreiben die zu entfernenden Netzteile (bzw. Softwarekomponenten und deren Verschaltung), gefolgt von den hinzukommenden Netzteilen (bzw. Softwarekomponenten und deren Verschaltung). Der Austausch kann dann zu einem gemäß der Abarbeitungsreihenfolge günstigen Zeitpunkt, z.B. zwischen zwei Zyklen, erfolgen. Davon nicht betroffene Softwarekomponenten können daher im Laufzeitsystem ungestört weiter exekutiert werden. So werden partielle Änderungen im System möglich, ohne das Gesamtsystem stoppen zu müssen.

## Patentansprüche

1. Verfahren zur Erzeugung einer auf einem Zielsystem, bevorzugt einer Automatisierungseinrichtung (1) zur Entwicklung eines Fahrzeuges bzw. einer Fahrzeugkomponente, ablauffähigen Konfiguration (25) zur Durchführung einer Automatisierungsaufgabe auf dem Zielsystem, wobei
- aus einer Bibliothek (20) eine Anzahl von abstrahierten, zielsystemunabhängigen Softwarekomponenten (20-a, 20-b ... 20-m), die einzelne Funktionen des Zielsystems umsetzen und die ein vorgegebenes Kommandointerface (22) und eine vorgegebene Schnittstelle (21) zu Datenkanälen aufweisen, gewählt werden,
- die gewählten zielsystemunabhängigen Softwarekomponenten (20-a, 20-b ... 20-m) über ihre Datenkanäle zur Realisierung der Automatisierungsaufgabe zu einem Modell (23) zusammengeschaltet werden,
- das Modell (23) durch eine Modelltransformation selbsttätig in eine Netzliste (24) bestehend aus Knoten, Attributen und Kanten übergeführt wird, wobei die Softwarekomponenten (20-a, 20-b ... 20-m) die Knoten, die initialen Parameter die Attribute und die Datenkanäle die Kanten der Netzliste bilden, **dadurch gekennzeichnet, dass**
- die zielsystemunabhängigen Softwarekomponenten (20-a, 20-b ... 20-m) in der Netzliste (24) in zielsystemabhängige Softwarekomponenten der ablauffähigen Konfiguration (25) transformiert werden indem die zielsystemunabhängigen Softwarekomponenten (20-a, 20-b ... 20-m) in Form von m:n-Relationen, vorzugsweise 1:1-Relationen, unter Berücksichtigung am Zielsystem vorhandener konkreter Komponenten und Ressourcen in zielsystemabhängige Softwarekomponenten gemappt werden,
- die zielsystemabhängigen Softwarekomponenten der ablauffähigen Konfiguration (25) am Zielsystem zur Durchführung der Automatisierungsaufgabe instantiiert und über deren Kommandointerface parametrisiert werden und
- aus der Netzliste (24) zur signalflussrichtigen Abarbeitung die Abarbeitungsreihenfolge der verschalteten Softwarekomponenten am Zielsystem ermittelt wird.

2. Verfahren nach Anspruch 1, **dadurch gekennzeichnet, dass** ein Filter und/oder ein Abtastglied automatisch vorgeschlagen bzw. in die ablauffähige Konfiguration (25) eingesetzt wird, falls es zu Frequenzänderungen im Signalfluss kommt.

3. Verfahren nach Anspruch 1 oder 2, **dadurch gekennzeichnet, dass** die Softwarekomponenten am Zielsystem zumindest teilweise in unterschiedlichen Threads abgearbeitet werden.

4. Verfahren nach Anspruch 3, **dadurch gekennzeichnet, dass** unterschiedliche Threads zumindest teilweise mit unterschiedlichen Frequenzen getaktet werden.

5. Verfahren nach Anspruch 3 oder 4, **dadurch gekennzeichnet, dass** am Zielsystem generische Prozesse laufen, die Prozessraum, Mailboxen und Threads zur Verfügung stellen, in die die Softwarekomponenten als dynamisch ladbare Library dazu geladen und beliebig oft instantiiert werden.

6. Verfahren nach Anspruch 3, **dadurch gekennzeichnet, dass** eine Softwarekomponente einen Trigger aufweist, wobei die Trigger Information automatisch und transparent entlang der Abarbeitungsreihenfolge gerouted wird.

7. Verfahren nach Anspruch 6, **dadurch gekennzeichnet, dass** einem Trigger einer Softwarekomponente ein Zeitbudget zugeteilt wird und eine Softwarekomponente, die dieses Zeitbudget überzieht, suspendiert wird oder eine Warnung versendet.

8. Verfahren nach einem der Ansprüche 1 bis 7, **dadurch gekennzeichnet, dass** eine Softwarekomponente am Zielsystem in einem Zyklus mehr als einmal bearbeitet wird.

9. Verfahren nach einem der Ansprüche 1 bis 8, **dadurch gekennzeichnet, dass** die Abarbeitungsreihenfolge zur Laufzeit zwischen zwei vollständigen Zyklen umgeschaltet oder modifiziert wird, indem der neue Ablauf vorbereitet und das Umschalten/Modifizieren dann synchron zwischen Ende des einen und Beginn des nächsten Zyklus erfolgt.

10. Verfahren nach einem der Ansprüche 1 bis 9, **dadurch gekennzeichnet, dass** Änderungen einer ablauffähigen Konfiguration (25) über Delta-Netzlisten durchgeführt werden, wobei eine Delta-Netzliste die zu entfernenden Netzteile und die hinzukommenden Netzteilen beschreibt und der Austausch zu einem gemäß der Abarbeitungsreihenfolge günstigen Zeitpunkt erfolgt.

11. Verfahren nach einem der Ansprüche 1 bis 10, **dadurch gekennzeichnet, dass** Softwarekomponenten am Zielsystem auf unterschiedlichen CPU's oder unterschiedlichen Kernen einer CPU exekutiert werden.

12. Vorrichtung zum Erzeugen und Ausführen einer auf einem Zielsystem, bevorzugt einer Automatisierungseinrichtung (1) zur Entwicklung eines Fahrzeuges bzw. einer Fahrzeugkomponente, ablauffähigen Konfiguration zur Durchführung einer Automatisierungsaufgabe auf dem Zielsystem, wobei eine Entwicklungseinheit (30) vorgesehen ist, die mit dem Zielsystem verbunden ist und in der
- eine Bibliothek (20) vorgesehen ist, aus der eine Anzahl von abstrahierten, zielsys-temunabhängigen Softwarekomponenten, die einzelne Funktionen des Zielsystems umsetzen und die ein vorgegebenes Kommandointerface (22) und eine vorgegebene Schnittstelle (21) zu Datenkanälen aufweisen, über einer Benutzerschnittstelle (26) auswählbar und die gewählten zielsystemunabhängigen Softwarekomponenten (20-a, 20-b, ... 20-m) über ihre Datenkanäle zur Realisierung der Automatisierungsaufgabe zu einem Modell (23) zusammenschaltbar sind,
- eine Modelltransformationseinheit (27) vorgesehen ist, die das Modell (23) durch eine Modelltransformation selbsttätig in eine Netzliste (24) bestehend aus Knoten, Attributen und Kanten übergeführt, wobei die Softwarekomponenten die Knoten, die initialen Parameter die Attribute und die Datenkanäle die Kanten der Netzliste (24) bilden, **dadurch gekennzeichnet, dass**
- eine Zielsystemtransformationseinheit (28) vorgesehen ist, die die zielsystemunabhängigen Softwarekomponenten (20-a, 20-b, ... 20-m) in der Netzliste (24) in zielsystemabhängige Softwarekomponenten der ablauffähigen Konfiguration (25) transformiert, indem die Zielsystemtransformationseinheit (28) die zielsystemunabhängigen Softwarekomponenten (20-a, 20-b ... 20-m) in Form von m:n-Relationen, vorzugsweise 1:1-Relationen, unter Berücksichtigung am Zielsystem vorhandener konkreter Komponenten und Ressourcen in zielsystemabhängige Softwarekomponenten mappt, die zielsystemabhängigen Softwarekomponenten der ablauffähigen Konfiguration (25) am Zielsystem zur Durchführung der Automatisierungsaufgabe instantiiert und über deren Kommandointerface parametrisiert und aus der Netzliste (24) zur signalflussrichtigen Abarbeitung die Abarbeitungsreihenfolge der verschalteten Softwarekomponenten am Zielsystem ermittelt.

13. Vorrichtung nach Anspruch 12, **dadurch gekennzeichnet, dass** das Zielsystem als Multi-CPU oder Multi-Kern System ausgeführt ist und Softwarekomponenten am Zielsystem auf unterschiedlichen CPU's oder unterschiedlichen Kernen einer CPU exekutiert werden.

## Claims

1. Process for creating a configuration (25) executable on a target system for performing an automatization task on the target system, preferably an automatization unit (1) for the development of a vehicle or a vehicle component, wherein
- from a library (20) a number of abstracted software components are selected that are independent of the target system (20-a, 20-b ...20-m) and perform individual functions of the target system and have a specified command interface (22) and a specified interface (21) to data channels,
- the selected software components that are independent of the target system (20-a, 20-b ...20-m) are interconnected into a model (23) via their data channels for realizing the automatization task,
- the model (23) automatically transforms as a result of a model transformation into a net list (24) consisting of nodes, attributes and edges, whereby the software components (20-a, 20-b ...20-m) form the nodes, the initial parameters the attributes and the data channels the edges of the net list, **characterized by, that**
- the software components that are independent of the target system (20-a, 20-b ...20-m) in the net list (24) are transformed into software components executable in the configuration (25) that are dependent on the target system while the software components that are independent of the target system are mapped to software components that are dependent on the target system in form of m:n relations, preferably 1:1 relations, while considering which specific components and resources are available at the target,
- the software components executable in the configuration (25) on the target system that are dependent on the target system are instantiated for performing the automation task and are parameterized via their command interface and
- from the net list (24), the processing sequence of the interconnected software components at the target system is identified for processing in the correct information flow.

2. Process according to Claim 1, **characterized by, that** a filter and/or a sampling element is automatically proposed or inserted into the executable configuration (25), in the event there are frequency changes in the information flow.

3. Process according to claim 1 or 2, **characterized by, that** the software components are processed at the target system, at least partially in different threads.

4. Process according to Claim 3, **characterized by, that** different threads are at least partially synchronized with different frequencies.

5. Process according to claim 3 or 4, **characterized by, that** generic processes run at the target system that make process area, mail boxes and threads available into which the software components are also loaded as dynamically loadable library and are instantiated as often as desired.

6. Process according to Claim 3, **characterized by, that** one software component is provided with a trigger, whereby the trigger information is automatically and transparently routed along the processing sequence.

7. Process according to Claim 6, **characterized by, that** a time budget is allocated to a trigger of a software component and a software component that exceeds this time budget is suspended or sends a warning.

8. Process according to one of claims 1 to 7, **characterized by, that** a software component is processed at the target system in a cycle more than once.

9. Process according to one of claims 1 to 8, **characterized by, that** the processing sequence is modified or switched during the run-time between two complete cycles by preparing the new process and the switching/modifying then takes place synchronously between the end of one and the beginning of the next cycle.

10. Process according to one of claims 1 to 9, **characterized by, that** changes of an executable configuration (25) are performed by delta net lists, whereby a delta net list describes the net parts that are to be removed and the parts that are to be added and the exchange takes place at a point in time that is favorable as per the processing sequence.

11. Process according to one of claims 1 to 10, **characterized by, that** software components are executed by different CPUs or different cores of a CPU at the target system.

12. Device for creating and executing a configuration executable on a target system for performing an automatization task on the target system, preferably an automatization unit (1) for the development of a vehicle or a vehicle component, wherein a development unit (30) is provided that is connected with the target system and in which a
- library (20) is provided from which a number of abstracted software components are selectable by a user interface (26), said software components are independent of the target system and implement individual functions of the target system and which are provided with a specified command interface (22) and a specified interface (21) to the data channels, and the selected software components (20-a, 20-b ...20-m) that are independent of the target system can be interconnected via their data channels to form a model (23) for realizing the automatization task,
- a model transformation unit (27) is provided that automatically transforms the model (23) by a model transformation into a net list (24) consisting of nodes, attributes and edges, whereby the software components are the nodes, the initial parameters the attributes and the data channels the edges of the net list (24) **characterized by, that,**
- a target system transformation unit (28) is provided that transforms the software components (20-a, 20-b ...20-m) in the net list (24) that are independent of the target system into software components of the executable configuration (25) that are dependent on the target system while the software components that are independent of the target system are mapped to software components that are dependent on the target system in form of m:n relations, preferably 1:1 relations, while considering which specific components and resources are available at the target system, that instantiates the software components of the executable configuration (25) that are dependent on the target system for performing the automation task and parameterizes the net list (24) via their command interface and identifies the processing sequence of the interconnected software components at the target system for processing in correct information flow.

13. Device according to Claim 12, **characterized by, that** the target system is designed as multi-CPU or multi-core system and software components are executed on different CPUs or different cores of a CPU at the target system.

## Revendications

1. Procédé de génération d'une configuration exécutable (25) sur un système cible, de préférence un dispositif d'automatisation (1) destiné au développement d'un véhicule ou d'un composant de véhicule, pour exécuter une tâche d'automatisation sur le système cible,
- un certain nombre de composants logiciels virtualisés (20-a, 20-b...20-m), indépendants du système cible, qui transforment les fonctions individuelles du système cible et qui comportent une interface de commande (22) prescrite et une interface prédéterminée (21) avec des canaux de données, étant sélectionnés dans une bibliothèque (20),
- les composants logiciels (20-a, 20-b...20-m), indépendants du système cible, qui ont été sélectionnés étant interconnectés par le biais de leurs canaux de données pour exécuter la tâche d'automatisation pour former un modèle (23),
- le modèle (23) étant automatiquement converti par une transformation de modèle en une liste de réseau (24) constituée de noeuds, d'attributs et de bords, les composants logiciels (20-a, 20-b...20-m), les noeuds, les paramètres initiaux, les attributs et les canaux de données formant les bords de la liste de réseau, **caractérisé en ce que**
- les composants logiciels (20-a, 20-b...20-m), indépendants du système cible, de la liste de réseau (24) étant transformés en les composants logiciels, dépendants du système cible, de la configuration exécutable (25), **en ce que** les composants logiciels (20-a, 20-b...20-m), indépendants du système cible, sont mappés dans des composants logiciels dépendants du système cible sous la forme de relations m:n, de préférence de relations 1:1 avec prise en compte de composants et de ressources concrets présents au niveau du système cible,
- les composants logiciels, dépendants du système cible, de la configuration exécutable (25) étant instanciés au niveau du système cible, et étant paramétrés par le biais de l'interface de commande, pour exécuter la tâche d'automatisation et
- la séquence d'exécution des composants logiciels interconnectés étant déterminée au niveau du système cible à partir de la liste de réseau (24) pour une exécution correcte en termes de flux de signaux.

2. Procédé selon la revendication 1, **caractérisé en ce qu'un** filtre et/ou un élément d'analyse est automatiquement proposé ou inséré dans la configuration exécutable (25) dans le cas où il se produit des variations de fréquence dans le flux de signaux.

3. Procédé selon la revendication 1 ou 2, **caractérisé en ce que** les composants logiciels sont traités au niveau du système cible au moins partiellement dans différents fils d'exécution.

4. Procédé selon la revendication 3, **caractérisé en ce que** différents fils d'exécution sont cadencés au moins partiellement à des fréquences différentes.

5. Procédé selon la revendication 3 ou 4, **caractérisé en ce que** des processus génériques sont exécutés au niveau du système cible, lesquels fournissent un espace de traitement, des boîtes aux lettres et des fils d'exécution dans lesquels les composants logiciels sont chargés sous la forme de bibliothèque chargeable dynamiquement et sont instanciés autant de fois que nécessaire.

6. Procédé selon la revendication 3, **caractérisé en ce qu'un** composant logiciel comporte un déclencheur, l'information de déclencheur étant routée automatiquement et de manière transparente le long de la séquence d'exécution.

7. Procédé selon la revendication 6, **caractérisé en ce qu'un** déclencheur d'un composant logiciel se voit allouer un budget temps et **en ce qu'**un composant logiciel couvrant ce budget temps est suspendu ou envoie un avertissement.

8. Procédé selon l'une des revendications 1 à 7, **caractérisé en ce qu'un** composant logiciel est traité plus d'une fois au niveau du système cible dans un cycle.

9. Procédé selon l'une des revendications 1 à 8, **caractérisé en ce que** la séquence de traitement est commutée ou modifiée en ce qui concerne le temps d'exécution entre deux cycles complets, **en ce que** la nouvelle exécution est préparée et la commutation/la modification est alors effectuée de manière synchrone entre la fin d'un cycle et le début du suivant.

10. Procédé selon l'une des revendications 1 à 9, **caractérisé en ce que** des modifications sont apportées à une configuration exécutable (25) par le biais de listes de réseau Delta, une liste de réseaux Delta décrivant les éléments de réseau à supprimer et les éléments de réseau à ajouter et l'échange étant effectué à un moment approprié selon la séquence de traitement.

11. Procédé selon l'une des revendications 1 à 10, **caractérisé en ce que** des composants logiciels sont exécutés au niveau du système cible sur différentes CPU ou différents coeurs d'une CPU.

12. Dispositif de génération et d'exécution d'une configuration exécutable sur un système cible, de préférence un dispositif d'automatisation (1) destiné au développement d'un véhicule ou d'un composant de véhicule, pour exécuter une tâche d'automatisation sur le système cible, une unité de développement (30) étant prévue qui est reliée au système cible et dans laquelle
- une bibliothèque (20) est prévue à partir de laquelle un certain nombre de composants logiciels virtualisés, indépendants du système cible, qui transforment les fonctions individuelles du système cible et qui comportent une interface de commande (22) prescrite et une interface prédéterminée (21) avec des canaux de données, peuvent être sélectionnés par le biais d'une interface utilisateur (26) et les composants logiciels (20-a, 20-b...20-m), indépendants du système cible, qui ont été sélectionnés peuvent être interconnectés par le biais de leurs canaux de données pour exécuter la tâche d'automatisation pour former un modèle (23),
- une unité de transformation de modèle (27) est prévue qui convertit automatiquement le modèle (23) par une transformation de modèle en une liste de réseau (24) constituée de noeuds, d'attributs et de bords, les composants logiciels, les noeuds, les paramètres initiaux, les attributs et les canaux de données formant les bords de la liste de réseau (24), **caractérisé en ce que**
- une unité de transformation de système cible (28) est prévue qui transforme les composants logiciels (20-a, 20-b...20-m), indépendants du système cible, de la liste de réseau (24) en des composants logiciels, dépendants du système cible, de la configuration exécutable (25), **en ce que** l'unité de transformation de système cible (28) mappe les composants logiciels (20-a, 20-b...20-m), indépendants du système cible, dans des composants logiciels dépendants du système cible sous la forme de relations m:n, de préférence de relations 1:1 avec prise en compte de composants et de ressources concrets présents au niveau du système cible, instancie les composants logiciels, dépendants du système cible, de la configuration exécutable (25) au niveau du système cible, et les paramètre par le biais de l'interface de commande, pour exécuter la tâche d'automatisation et détermine la séquence d'exécution des composants logiciels interconnectés au niveau du système cible à partir de la liste de réseau (24) pour une exécution correcte en termes de flux de signaux.

13. Dispositif selon la revendication 12, **caractérisé en ce que** le système cible est réalisé sous la forme d'un système multi-CPU ou multi-coeur et **en ce que** des composants logiciels sont exécutés au niveau du système cible sur différentes CPU ou différents coeurs d'une CPU.
